# EUROPÄISCHE PATENTSCHRIFT

(11) **EP 0 834 968 B1**
(45) Veröffentlichungstag und Bekanntmachung des Hinweises auf die Patenterteilung: **23.01.2002**
(21) Anmeldenummer: 97402287.3
(22) Anmeldetag: 29.09.1997
(51) Int. Cl.: H01R 35/02, B60R 16/02, H02G 11/00

(54) **Vorrichtung zur Stromübertragung zwischen zwei relativ zueinander bewegbaren Endstellen**
Device for transferring current between two terminals moving relatively to one another
Dispositif de transfert de courant entre deux terminaisons mobiles l'une par rapport à l'autre

(30) Priorität: 04.10.1996 DE 29617237 U
(43) Veröffentlichungstag der Anmeldung: 08.04.1998
(73) Patentinhaber: Nexans, 75008 Paris (FR)
(72) Erfinder: Schauer, Friedrich, Dipl.-Ing., 90562 Heroldsberg (DE); Czeschka, Martin, Dipl.-Ing., 91177 Thalmässing (DE)
(74) Vertreter: Döring, Roger, Dipl.-Ing.

(56) Entgegenhaltungen:
- EP-A- 0 444 584
- EP-A- 0 680 849

## Beschreibung

Die Erfindung bezieht sich auf eine Vorrichtung zur Stromübertragung zwischen zwei Endstellen, zwischen denen eine in einer Kassette untergebrachte, der elektrischen Verbindung dienende und in Windungen verlaufende Flachleiter-Bandleitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher die Flachleiter-Bandleitung an ihren an den Endstellen liegenden Enden um 90° abgebogen und aus der Kassette herausgeführt ist und bei welcher zumindest die abgebogenen und aus der Kassette herausragenden Enden der Flachleiter-Bandleitung jeweils in einen der Form derselben angepaßten, flachen Schutzkörper aus Isoliermaterial eingebettet sind (DE 91 07 726 Ul).

Derartige Vorrichtungen werden beispielsweise bei der Stromzuführung für einen Airbag in einem Kraftfahrzeug verwendet. Ein wesentliches Problem bei diesen Geräten ist die Stromübertragung zwischen feststehenden und beweglichen Teilen derselben. Dieses Problem tritt bei allen Geräten auf, bei denen zwei relativ zueinander bewegbare Endstellen vorhanden sind, von denen in dem meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der schwankenden Übergangswiderstände nachteilig.

Bei der eingangs erwähnten, bekannten Vorrichtung nach dem DE 91 07 726 U1 erfolgt die Stromübertragung durch die nach Art eines Federhauses gewickelte Flachleiter-Bandleitung - im folgenden kurz "FL-BL" genannt Bei einer relativen Drehbewegung der beiden durch die FL-BL verbundenen Endstellen "atmet" die aufgewickelte Leitung wie die Feder einer Uhr. Die Windungen der FL-BL werden in der einen Drehrichtung auf einen kleineren Durchmesser zusammengezogen Sie gehen in der anderen Drehrichtung wieder auf einen größeren Durchmesser auf. Die abgeknickten Enden der FL-BL dienen zum Anschluß derselben an eine Stromquelle einerseits und an Steuerelemente andererseits. Durch die Schutzkörper sind die mechanisch empfindlichen Leiter der FL-BL und die Knickstelle jeweils mechanisch geschützt. Probleme können sich bei dieser Vorrichtung ergeben, wenn die FL-BL mit einer erhöhten Anzahl von Leitern breiter wird. Ein entsprechend "langer" Raum zum Durchführen der vom Schutzkörper umgebenen FL-BL steht meist nicht zur Verfügung.

Der Erfindung liegt die Aufgabe zugrunde, die eingangs geschilderte Vorrichtung so zu gestalten, daß auch eine breitere FL-BL mit einer erhöhten Anzahl von Leitern und üblichem Schutzkörper im abgebogenen Bereich auf einfache Weise montiert werden kann.

Diese Aufgabe wird gemäß der Erfindung dadurch gelöst, daß der Schutzkörper ebenso wie die FL-BL im abgebogenen Teil in mindestens zwei parallel zueinander und entlang der Längserstreckung der FL-BL verlaufende, ebenfalls flache Teilkörper aufgeteilt sind, die in montiertem Zustand mit ihren Flachseiten aneinander liegen.

Bei dieser Vorrichtung bleibt der Schutzkörper als mechanischer Schutz des abgeknickten Teils der FL-BL erhalten. Für die Montage der Kassette an bzw. in Teilen des Lenkrades eines Kraftfahrzeugs sind bei dieser Vorrichtung keine wesentlichen Änderungen erforderlich. Die Öffnung zur Durchführung des Schutzkörpers kann in ihrer Länge unverändert bleiben. Sie muß nur geringfügig aufgeweitet werden, damit ein aus zwei oder mehr, dicht aneinander liegenden Teilkörpern bestehender Schutzkörper hindurchgeführt werden kann. Da die Teilkörper mit ihren Flachseiten aneinander liegen, ist die Verdickung des Schutzkörpers insgesamt nicht wesentlich.

Ein Ausführungsbeispiel des Erfindungsgegenstandes ist in den Zeichnungen dargestellt.

Es zeigen:
Fig. 1 und 2 schematisch Querschnitte durch zwei mit einer Vorrichtung nach der Erfindung bestückte Geräte
Fig 3 eine Prinzipausführung des Endes der in der Vorrichtung einsetzbaren FL-BL in vergrößerter Darstellung.
Fig. 4 ein Ende der FL-BL mit Schutzkörper vor dem Umbiegen in nochmals vergrößerter Darstellung.
Fig. 5 einen Schnitt durch Fig. 4 längs der Linie V - V.
Fig. 6 ein Ende der FL-BL mit Schutzkorper in fertiggestellter Ausführung
Fig. 7 einen Schnitt durch Fig. 6 längs der Linie VII - VII.

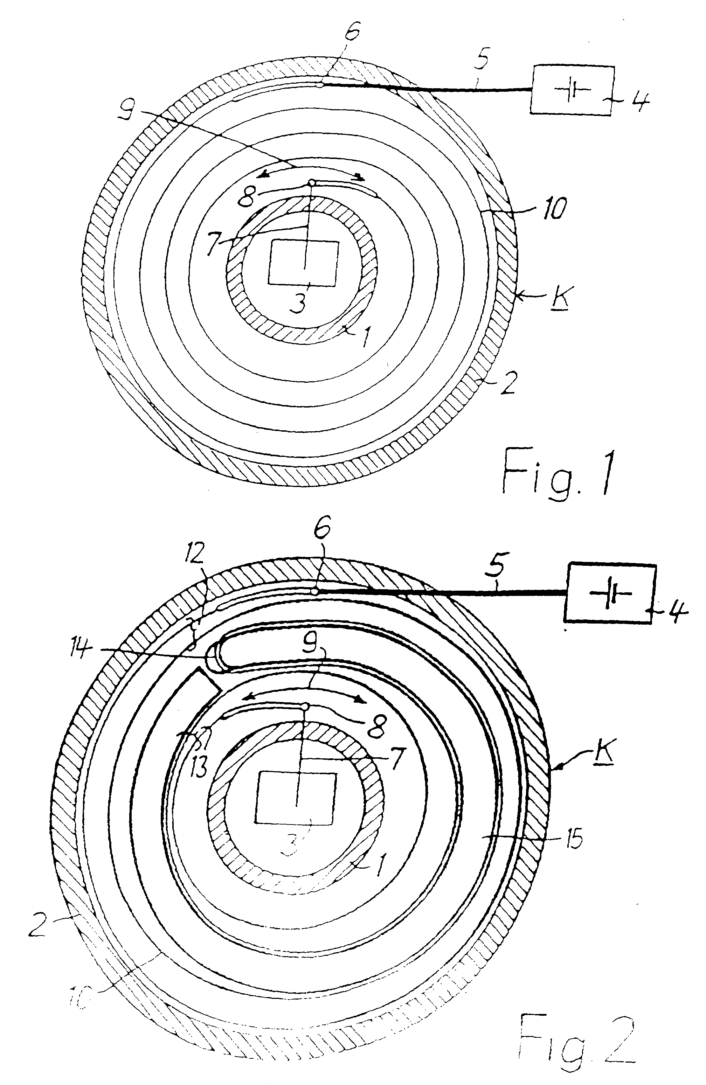

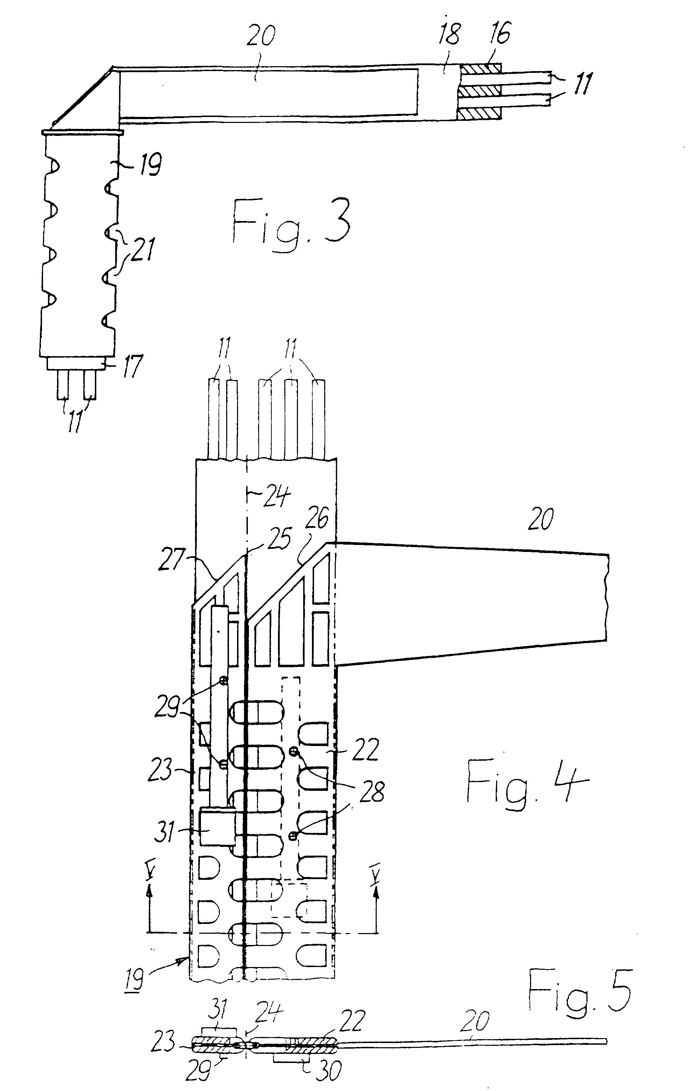

In Fig. 1 sind schematisch zwei beispielsweise kreisförmig ausgebildete Wandungen 1 und 2 einer Kassette K dargestellt, die beispielsweise zur Stromübertragung für einen Airbag in das Lenkrad eines Kraftfahrzeugs eingebaut werden kann. Zur Stromversorgung einer Elektronik 3 der Kassette K ist dieselbe an die Batterie 4 des Kraftfahrzeugs angeschlossen Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist Zwischen den beiden Endstellen 6 und 8 ist eine FL-BL 10 angebracht. Sie ist in dem in Fig. 3 dargestellten, nur der Erläuterung dienenden Beispiel mit zwei Leitern 11 versehen. Die FL-BL 10 hat tatsächlich mehr als zwei Leiter 11. Die Leitungen 5 und 7 sind an die FL-BL 10 angeschlossen.

Die FL-BL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FL-BL 10 vorgesehen sein. Die Drehbewegung der Endstelle 8 macht sich dann für eine einzelne Windung der FL-BL 10 nicht wesentlich bemerkbar. Es wird lediglich der Durchmesser des aus allen Windungen der FL-BL 10 bestehenden Wickels verkleinert bzw. vergrößert.

Die FL-BL 10 kann gemäß Fig. 2 in der Kassette K auch in Windungen angeordnet sein, die in einen äußeren Wickelbereich 12 und einen inneren Wickelbereich 13 unterteilt sind. Die beiden Wickelbereiche 12 und 13 sind durch Klammern gekennzeichnet. Sie umfassen in der aus Fig. 2 ersichtlichen Mittelstellung bzw. in der Montageposition der Kassette K jeweils zwei bis drei Windungen In den beiden Wickelbereichen 12 und 13 haben die Windungen der FL-BL 10 entgegengesetzte Wickelrichtungen Die Wickelbereiche 12 und 13 sind durch eine etwa U-förmig ausgeführte Umkehrstelle 14 miteinander verbunden Zwischen den beiden Wickelbereichen 12 und 13 ist ein einteiliger, ringförmig ausgeführter Führungskörper 15 angebracht, der die Umkehrstelle 14 umfaßt. Der Führungskörper 15 ist um seinen Mittelpunkt drehbar und in Umfangsrichtung der Kassette K, also in Richtung des Doppelpfeils 9, bewegbar. Er besteht vorzugsweise aus Kunststoff und ist dadurch sehr leicht, so daß er leichtgängig in der Kassette K bewegt werden kann.

Die FL-BL 10 hat in der nur der Erläuterung dienenden Darstellung nach Fig 3 zwei flache Leiter 11, die zwischen Folien aus Isolierstoff als Isolierung 16 einkaschiert sind. An ihren Enden, von denen in Fig 3 nur eins dargestellt ist, ist die FL-BL 10 um 90° abgeknickt. Ihr in der Darstellung gemäß Fig. 3 nach unten weisender Teil 17 kann zum Anschluß an eine Stromquelle verwendet werden. Er ragt in montierter Position aus der Kassette K heraus Der Teil 18 der FL-BL 10 gehört zu der gewickelten FL-BL 10 Der Teil 17 der FL-BL 10 ist in einen aus Isoliermaterial bestehenden flachen Schutzkörper 19 eingebettet, der beispielsweise um die FL-BL 10 herumgespritzt ist Der Schutzkörper 19 könnte aber auch ein vorgefertigtes Teil aus Isoliermaterial sein, das auf die FL-BL 10 aufgesteckt wird. Er kann sich bis. über die Knickstelle am Ende der FL-BL 10, an dem dieselbe um 90° gebogen ist, erstrecken. In Höhe der Knickstelle ist am Schutzkörper 19 eine Lasche 20 angeformt, die gut biegbar ist und sich in Richtung des Teils 18 der FL-BL 10 erstreckt. Die Lasche 20 liegt an der äußeren Windung der FL-BL 10 an. Die in Fig. 3 eingezeichneten Aussparungen 21 des Schutzkörpers 19 dienen zur Verbesserung der Biegbarkeit desselben.

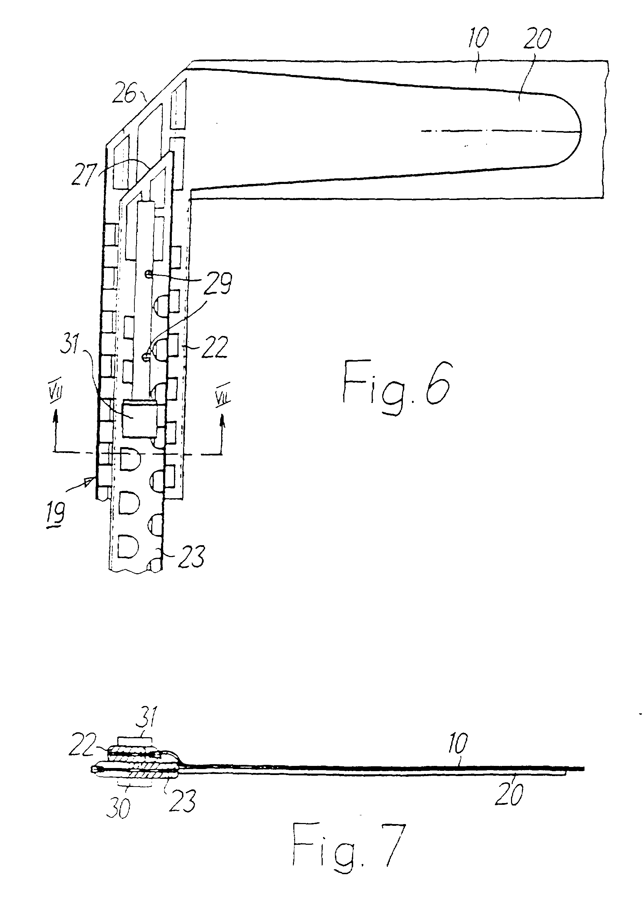

Die FL-BL 10 hat in tatsächlicher Ausführungsform mehr als zwei Leiter 11 In einer bevorzugten Ausführungsform sind fünf Leiter 11 vorgesehen. Der das abgebogene Ende der FL-BL 10 umgebende flache Schutzkörper 19 ist für eine derart breite FL-BL 10 gemäß den Fig. 4 und 5 in zwei ebenfalls flache Teilkörper 22 und 23 unterteilt. Dabei umschließt der Teilkörper 22 beispielweise drei Leiter 11, wahrend vom Teilkörper 23 zwei Leiter 11 umschlossen werden Der aus den Teilkörpern 22 und 23 bestehende Schutzkörper 19 wird vorzugsweise in einem Arbeitsgang einteilig durch Spritzgießen erzeugt Die Lasche 20 wird dabei gleichzeitig mit hergestellt Sie ist am Teilkörper 22 angebracht und hat eine der Breite der FL-BL 10 entsprechende Breite.

Zur Fertigstellung des montierbaren Schutzkörpers 19 werden die beiden Teilkörper 22 und 23 entlang der strichpunktierten Linie 24 getrennt. Ein entsprechender Schnitt wird mindestens bis zur Spitze 25 des Teilkörpers 23 geführt. Dabei wird auch die FL-BL 10 mit durchtrennt. Die beiden Teilkörper 22 und 23 werden anschließend getrennt von einander um ihre unter einem Winkel von 45° verlaufenden Kanten 26 bzw. 27 gegenüber der aus ihnen herausragenden FL-BL 10 gebogen, und zwar derart, daß sie zum Schluß mit ihren Flachseiten aneinander liegen. Diese Montageposition geht aus den Fig 6 und 7 hervor. Das Ende der FL-BL 10 ist darin um 90° gegenüber deren gewundenem Teil abgebogen Die Lasche 20 liegt an der inneren Windung der FL-BL 10 an.

Im fertig zusammengefügten Schutzkörper 19 liegt der Teilkörper 23 in der Darstellung der Fig. 6 und 7 eigentlich hinter dem Teilkörper 22. Er ware dann durch den Teilkörper 22 verdeckt und nicht erkennbar Aus diesem Grunde ist die Darstellung in den Fig. 6 und 7 so gewählt worden, als ob der Teilkörper 22 vorn auf dem Teilkörper 23 liegt.

Die Breite des Schutzkörpers 19 wird bei dieser Vorrichtung durch den breiteren Teilkörper 22 bestimmt. Seine Dicke entspricht der additiven Dicke der beiden mit ihren Flachseiten aneinander liegenden Teilkörper 22 und 23. An den beiden Teilkörpern 22 und 23 können zusätzlich Elemente 28 und 29 angebracht sein, durch welche dieselben aneinander fixiert werden können. Im fertigen Schutzkörper 19 greift dann beispielweise ein Vorsprung 29 des Teilkörpers 23 in eine Vertiefung 28 des Teilkörpers 22 ein. Die von den Teilkörpern 22 und 23 abstehenden Blöcke 30 und 31 dienen zur Fixierung des Schutzkörpers 19 in einem denselben umgebenden Bauteil,

Die Anzahl der Leiter 11 der FL-BL 10 ist in sinnvollen Grenzen beliebig Ihre Aufteilung auf entsprechend dimensionierte Teilkörper des Schutzkörpers 19 ist variabel Die Teilkörper können auch mit gleicher Breite ausgeführt werden Es ist auch möglich, den Schutzkörper 19 aus mehr als zwei Teilkörpern 22 und 23 aufzubauen.

## Patentansprüche

1. Vorrichtung zur Stromübertragung zwischen zwei Endstellen (6, 8) zwischen denen eine in einer Kassette (4) untergebrachte, der elektrischen Verbindung dienende und in Windungen verlaufende Flachleiter-Bandleitung (10) mit mindestens zwei elektrischen Leitern (11) angeordnet ist, deren Länge wesentlich größer als der Abstand der beiden Endstellen voneinander ist, bei welcher mindestens eine der beiden Endstellen relativ zu der anderen bewegbar ist, bei welcher die Flachleiter-Bandleitung an ihren an den Endstellen liegenden Enden um 90° abgebogen und aus der Kassette herausgeführt ist und bei welcher zumindest die abgebogenen und aus der Kassette herausragenden Enden der Flachleiter-Bandleitung jeweils in einen der Form derselben angepaßten, flachen Schutzkörper (19) aus Isoliermaterial eingebettet sind, **dadurch gekennzeichnet, daß** der Schutzkörper (19) ebenso wie die Flachleiter-Bandleitung (10) im abgebogenen Teil in mindestens zwei parallel zueinander und entlang der Längserstreckung der Flachleiter-Bandleitung verlaufende Teilkörper (22,23) aufgeteilt sind, die in montiertem Zustand mit ihren Flachseiten aneinander liegen.

2. Vorrichtung nach Anspruch 1, **dadurch gekennzeichnet, daß** die Teilkörper (22,23) durch ineinander greifende Elemente (28,29) untereinander fixiert sind.

3. Vorrichtung nach Anspruch 1 und 2, **dadurch gekennzeichnet, daß** an den Teilkörpern (22,23) des Schutzkörpers (19) im Bereich der Knickstelle der Flachleiter-Bandleitung (10) mindestens eine biegbare Lasche (20) angebracht ist, die sich in Montageposition in Richtung der Windungen der Flachleiter-Bandleitung (10) erstreckt und an deren jeweils äußerer Windung anliegt.

## Claims

1. A device to transmit current between two terminals (6,8) between which is a flat conductor stripline (10) that provides the electrical connection and is in a cartridge (K), runs in windings and has at least two electrical conductors (11) whose length is substantially greater than the distance between the two terminals, whereby at least one of the two terminals can be moved relative to the other, and the ends of the flat conductor stripline abutting the terminals are bent 90° and extend out of the cartridge, and whereby at least the bent ends of the flat conductor stripline extending out of the cartridge are embedded in a flat protective body (19) of insulating material adapted to the shape of the ends, **characterized in that** the protective body (19) and the flat conductor-stripline (10) are divided at the bend into at least two parallel sections (22, 23) running the length of the flat conductor stripline, and the flat sides of the sections abut each other when mounted.

2. A device according to claim 1, **characterized in that** the sections (22, 23) are fixed in relation to each other by meshing elements (28, 29).

3. A device according to claims 1 and 2, **characterized in that** at least one flexible tab (20) is on the sections (22, 23) of the protective body (19) at the bend of the flat conductor stripline (10) that, when installed, extends in the direction of the windings of the flat conductor stripline (10) and abuts the outer winding.

## Revendications

1. Un dispositif de transfert de courant entre deux parties terminales (6, 8) entre lesquelles est disposé dans un boîtier (K), un câble conducteur plat (10) assurant la liaison électrique et enroulé en spires et comportant au moins deux conducteurs électriques (11) et étant substantiellement plus long que la distance entre les deux parties terminales, dispositif dont au moins une des extrémités est mobile par rapport à l'autre et aux extrémités duquel les extrémités du câble plat sont repliées à 90° et conduites hors du boîtier, et où au moins les extrémités du câble conducteur plat sortant du boîtier sont chachune enfermées dans un corps de protection plat (19) en matériau isolant dont la forme est adaptée à celle du câble plat, **caractérisé par le fait que** le corps de protection (19) tout comme le câble conducteur plat (10) sont partagés dans leur partie repliée en au moins deux parties de corps (22, 23) parallèles entre elles et disposées dans le sens de la longueur du câble conducteur plat, et l'une contre l'autre dans leur état d'assemblage.

2. Un dispositif selon la revendication 1, et **caractérisé par le fait que** les parties de corps (22, 23) sont fixées entre elles par des éléments enfichables (28, 29).

3. Un dispositif selon les revendications 1 et 2, et **caractérisé par le fait que** les parties (22, 23) du corps de protection (19) sont équipées d'une languette pliable (20) dans la zone du point de pliage du câble conducteur plat (10) et qui, dans sa position assemblée, s'étend dans le sens des spires du câble conducteur plat (10) et est en contact avec la spire externe de celui-ci.
